# EUROPEAN PATENT APPLICATION

(11) **EP 4 723 460 A1**
(43) Date of publication of application: **08.04.2026**
(21) Application number: 24822439.6
(22) Date of filing: 07.05.2024
(51) Int. Cl.: H02M 3/158, H02M 1/08

(54) **DIRECT CURRENT CONVERTER**

(30) Priority: 16.06.2023 CN 202310722567
(71) Applicant: Huawei Digital Power Technologies Co., Ltd., Shenzhen, Guangdong 518043 (CN)
(72) Inventor: FU, Mingxiao, Shenzhen, Guangdong 518043 (CN); CHENG, Jiebin, Shenzhen, Guangdong 518043 (CN); LIU, Yongquan, Shenzhen, Guangdong 518043 (CN); GU, Guilei, Shenzhen, Guangdong 518043 (CN); CHEN, Dong, Shenzhen, Guangdong 518043 (CN)
(74) Representative: Maiwald GmbH
(86) International application number: PCT/CN2024/091536
(87) International publication number: WO 2024/255485

(57) **Abstract**

This application provides a direct current converter, including a first BUCK circuit, a second BUCK circuit, a charge pump circuit, a drive circuit, a controller, and a power conversion circuit. A photovoltaic module is connected to the power conversion circuit. The power conversion circuit is connected to an inverter. A direct current output by the power conversion circuit is converted into an alternating current via the inverter, and the alternating current is connected to a power grid. The direct current converter implements maximum power tracking of the photovoltaic module. The first BUCK circuit provides a first power supply for the drive circuit, and provides a power supply for the charge pump circuit. The charge pump circuit provides a second power supply for the drive circuit. The second BUCK circuit provides a power supply for the controller. The first BUCK circuit and the charge pump circuit serve as two independent power supplies to supply power to the drive circuit, so that switching transistors in the power conversion circuit are separately controlled. This reduces electromagnetic interference and noise, and improves efficiency and stability of the power conversion circuit.

## Description

### CROSS-REFERENCE TO RELATED APPLICATION

This application claims priority to Chinese Patent Application No. 202310722567.9, filed with the China National Intellectual Property Administration on June 16, 2023 and entitled "DIRECT CURRENT CONVERTER", which is incorporated herein by reference in its entirety.

### TECHNICAL FIELD

This application relates to the field of photovoltaic power generation, and in particular, to a direct current converter.

### BACKGROUND

A photovoltaic system is configured to convert, through a power conversion circuit, a direct current generated by a photovoltaic module into an alternating current that meets a power grid requirement, and then connect the alternating current to a public power grid. The photovoltaic system needs to operate under the drive of a plurality of types of weak direct current power supplies. In addition, to implement a synchronous rectification function of the power conversion circuit, two independent drive power supplies and one half-bridge drive need to be disposed. However, a circuit structure for implementing the foregoing functions is complex, and a large quantity of chips are required. As a result, costs of the photovoltaic system are high. Therefore, a new circuit structure is needed to reduce the costs of the photovoltaic system and simplify an overall power supply design.

### SUMMARY

This application provides a direct current converter. A first BUCK circuit and a charge pump circuit serve as two independent power supplies to supply power to a drive circuit, so that switching transistors in a power conversion circuit are separately controlled. This reduces electromagnetic interference and noise, and improves efficiency and stability of the power conversion circuit.

According to a first aspect, this application provides a direct current converter. The direct current converter includes a first BUCK circuit, a second BUCK circuit, a charge pump circuit, and a drive circuit. An input end of the first BUCK circuit is configured to connect to a photovoltaic module. An output end of the first BUCK circuit is connected to an input end of the second BUCK circuit, an input end of the charge pump circuit, and a first power supply end of the drive circuit. An output end of the charge pump circuit is connected to a second power supply end of the drive circuit. An input end of a power conversion circuit is configured to connect to the photovoltaic module. An output end of the power conversion circuit is configured to connect to an inverter. A direct current output by the power conversion circuit is converted into an alternating current via the inverter, and the alternating current is connected to a power grid. A control signal input end of the drive circuit is connected to a controller. A drive signal output end of the drive circuit is connected to a control end of the power conversion circuit. The direct current converter is configured to implement maximum power tracking of the photovoltaic module. The first BUCK circuit is configured to provide a first power supply for the drive circuit, and provide a power supply for the charge pump circuit. The charge pump circuit is configured to provide a second power supply for the drive circuit. The second BUCK circuit is configured to provide a power supply for the controller.

The drive circuit needs to provide isolated drive power supplies for some switching transistors in the power conversion circuit. Therefore, the charge pump circuit providing a power supply for the drive circuit is disposed in this application. The charge pump circuit converts a voltage output by the first BUCK circuit into one independent power supply. The first BUCK circuit and the charge pump circuit may serve as two independent power supplies to supply power to the drive circuit at the same time. In this manner, two power supplies may be provided for the drive circuit, so that switching transistors in the power conversion circuit are independently controlled. This reduces electromagnetic interference and noise, and improves efficiency and stability of the power conversion circuit.

In a possible implementation, the first BUCK circuit includes at least one switching transistor, a first inductor, and a first capacitor. The second BUCK circuit includes at least one switching transistor, a second inductor, and a second capacitor. Each switching transistor in the first BUCK circuit, each switching transistor in the second BUCK circuit, the charge pump circuit, and the drive circuit are disposed in a packaged chip. The packaged chip includes a first pin, a second pin, a third pin, and a fourth pin. The first pin is connected to the first inductor. The second pin is connected to the first capacitor. The third pin is connected to the second inductor. The fourth pin is connected to the second capacitor.

In this application, an inductor and a capacitor are placed outside a package, for reducing a size of the packaged chip, so that a more complex circuit design can be implemented when design space is limited. In addition, the inductor and the capacitor are placed outside the package, so that maintenance and replacement of the inductor and the capacitor are easier, and the packaged chip does not need to be detached. The inductor may heat up during working. Therefore, placing the inductor outside the packaged chip can transfer heat to a surrounding environment more quickly, to reduce a temperature of the packaged chip and improve reliability and a service life of the direct current converter. Moreover, placing the inductor outside the packaged chip can reduce electromagnetic interference, so that a magnetic field and an electric field of the inductor do not interfere with other circuit components.

In addition, each switching transistor in the first BUCK circuit, each switching transistor in the second BUCK circuit, the charge pump circuit, and the drive circuit are disposed in a same package structure of the packaged chip, so that physical connection distances between circuits can be reduced, and reliability of the entire direct current converter is improved. The foregoing components and circuits are placed in the same package. This may play a physical protection role, and reduce a failure rate of the circuit components. In addition, a plurality of circuits are integrated into the same package, and some components may be shared. Therefore, a quantity of components in the circuits may be further reduced.

The first BUCK circuit may include components such as the switching transistor, the first inductor located outside the packaged chip, and the first capacitor located outside the packaged chip. The switching transistor converts an input voltage of the photovoltaic module into a current via the first inductor, then the current is stored in the first capacitor, and finally energy in the first capacitor is released through periodic switching of the switching transistor. The second BUCK circuit may include components such as the switching transistor, the second inductor located outside the packaged chip, and the second capacitor located outside the packaged chip. The switching transistor converts an input voltage of the first BUCK circuit into a current via the second inductor, then the current is stored in the second capacitor, and finally energy in the second capacitor is released through periodic switching of the switching transistor, to provide a plurality of power supplies with different voltages through the first BUCK circuit and the second BUCK circuit.

In a possible implementation, the power conversion circuit includes a first switching transistor, a second switching transistor, a third inductor, and a third capacitor. One end of the first switching transistor is connected to a positive input end of the photovoltaic module. The other end of the first switching transistor is connected to one end of the second switching transistor. The other end of the second switching transistor is connected to a negative input end of the photovoltaic module. One end of the third inductor is connected to the other end of the first switching transistor. The other end of the third inductor is connected to the one end of the second switching transistor. The other end of the third capacitor is connected to the other end of the second switching transistor. The drive circuit is configured to control turn-on statuses of the first switching transistor and the second switching transistor, to adjust an output power of the photovoltaic module.

In a possible implementation, the charge pump circuit includes a fourth switching transistor, a fifth switching transistor, a sixth switching transistor, a first diode, a fourth capacitor, and a fifth capacitor. One end of the fourth switching transistor is connected to the output end of the first BUCK circuit. The other end of the fourth switching transistor is connected to both one end of the fourth capacitor and a positive electrode of the first diode. The other end of the fourth capacitor is connected to a first end of the fifth switching transistor. A second end of the fifth switching transistor is grounded. The other end of the fourth capacitor is connected to a first end of the sixth switching transistor. A negative electrode of the first diode is connected to one end of the fifth capacitor. A second end of the sixth switching transistor is connected to the other end of the fifth capacitor.

Turn-on or turn-off states of the fourth switching transistor and the fifth switching transistor are controlled, to enable the fourth capacitor to be charged. Then a turn-on or turn-off state of the third switching transistor is controlled, to enable energy stored in the fourth capacitor to be transferred to the fifth capacitor, so that the fifth capacitor provides a drive power supply for the drive circuit.

Because the photovoltaic module is reversely connected, many hazards and risks are generated. In a possible implementation, the packaged chip further includes a detection circuit included in the packaged chip. The detection circuit includes a sixth switching transistor and a detection resistor. The detection circuit is connected in parallel to two sides of the output end of the power conversion circuit. The detection circuit is configured to detect whether the photovoltaic module is reversely connected.

In a possible implementation, the first BUCK circuit includes at least one switching transistor, the first inductor, and the first capacitor. The second BUCK circuit includes at least one switching transistor, the second inductor, and the second capacitor. Each switching transistor in the first BUCK circuit, each switching transistor in the second BUCK circuit, the charge pump circuit, the drive circuit, and the reverse connection detection circuit are disposed in the packaged chip.

In this application, the reverse connection detection circuit is placed inside the packaged chip, for reducing a size of the direct current converter, so that a more complex circuit design can be implemented when design space is limited.

In a possible implementation, after it is determined that the photovoltaic module is powered on, the third switching transistor is controlled to be turned on, to detect whether the photovoltaic module is reversely connected. Alternatively, when it is determined that the third capacitor has a residual charge, the third switching transistor is controlled to be turned on, to release the residual charge on the third capacitor.

After the photovoltaic system is powered on, the third switching transistor is pulled up to be turned on. In this case, if any photovoltaic module is reversely connected, a resistance value of the circuit is enabled to change. Further, resistances at two output ends of the photovoltaic module are measured by using a multimeter, so that a reverse connection existing in the photovoltaic module can be detected. In this way, operation of the photovoltaic module is stopped in time, and the photovoltaic module reversely connected is checked to prevent damage caused by operation of the photovoltaic module under the reverse connection. In addition, when the residual charge of the capacitor in the power conversion circuit needs to be released, the third switching transistor is turned on, so that the residual charge can also be released.

In a possible implementation, a positive output end of the first BUCK circuit is connected to a power input end of the drive circuit. A negative output end of the first BUCK circuit is connected to a ground end of the drive circuit. The negative electrode of the first diode of the charge pump circuit is connected to a high-side half-bridge drive power input end of the drive circuit. The second end of the sixth switching transistor of the charge pump circuit is connected to a high-side half-bridge drive power ground end of the drive circuit. A high-side drive signal input end of the drive circuit is configured to receive a high-side control signal sent by the controller. A low-side drive signal input end of the drive circuit is configured to receive a low-side control signal sent by the controller. A high-side drive signal output end of the drive circuit is configured to output a drive signal to the first switching transistor based on the high-side control signal. A low-side drive signal output end of the drive circuit is configured to output a drive signal to the second switching transistor based on the low-side control signal.

### BRIEF DESCRIPTION OF DRAWINGS

FIG. 1 is a diagram of a structure of a direct current converter;
FIG. 2 is a diagram of a package structure of a direct current converter;
FIG. 3A is a schematic of a structure of a power conversion circuit;
FIG. 3B is a schematic of a structure of a charge pump circuit;
FIG. 4 is a connection diagram of a drive circuit;
FIG. 5 is a connection diagram of a reverse connection detection circuit; and
FIG. 6 is a diagram of a complete structure of a direct current converter.

### DESCRIPTION OF EMBODIMENTS

To make the objectives, technical solutions, and advantages of this application clearer, the following further describes this application in detail with reference to the accompanying drawings. However, example implementations may be implemented in a plurality of forms and should not be construed as being limited to implementations described herein. On the contrary, these implementations are provided such that this application is more comprehensive and complete and fully conveys the concept of the example implementations to a person skilled in the art. Identical reference numerals in the accompanying drawings denote identical or similar structures. Therefore, repeated description thereof is omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that, in the descriptions of this application, "at least one" means one or more, and "a plurality of" means two or more. In view of this, in embodiments of the present invention, "a plurality of' may also be understood as "at least two". The term "and/or" describes an association relationship between associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects. In addition, it should be understood that terms such as "first" and "second" in the descriptions of this application are merely used for distinguishing and description, but should not be understood as indicating or implying relative importance, or should not be understood as indicating or implying a sequence.

It should be noted that, "connection" in embodiments of this application means an electrical connection, and a connection between two electrical elements may be a direct or indirect connection between the two electrical elements. For example, a connection between A and B may represent that A and B are directly connected to each other, or A and B are indirectly connected to each other by using one or more other electrical elements. For example, the connection between A and B may also represent that A is directly connected to C, C is directly connected to B, and A and B are connected to each other through C.

To implement a synchronous rectification function of a power conversion circuit, two independent drive power supplies and one half-bridge drive need to be independently disposed in a photovoltaic system. However, a circuit structure for implementing the foregoing functions is complex, and a large quantity of chips are required. As a result, costs of the photovoltaic system are high. Therefore, a new circuit structure is needed to reduce the costs of the photovoltaic system and simplify an overall power supply design.

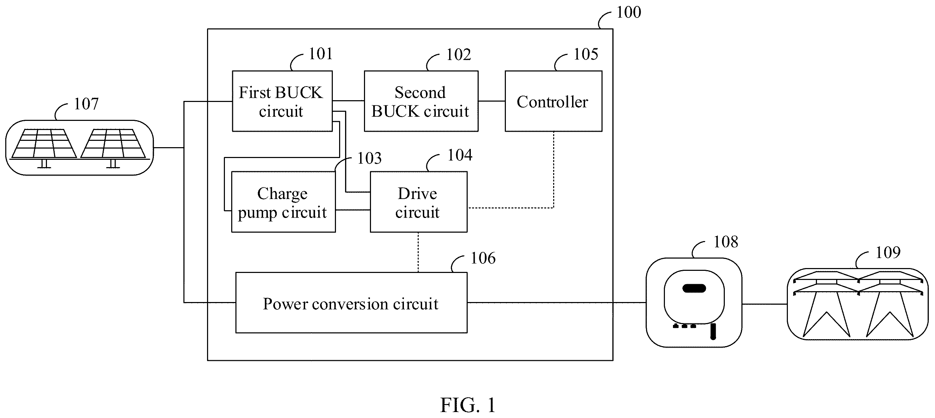

In view of this, this application provides a direct current converter, to reduce costs of the photovoltaic system and simplify a power supply design of the photovoltaic system. FIG. 1 is a diagram of a structure of a direct current converter. The direct current converter 100 includes a first BUCK circuit 101, a second BUCK circuit 102, a charge pump circuit 103, a drive circuit 104, a controller 105, and a power conversion circuit 106. An input end of the first BUCK circuit 101 is configured to connect to a photovoltaic module 107. An output end of the first BUCK circuit 101 is connected to an input end of the second BUCK circuit 102, an input end of the charge pump circuit 103, and a first power supply end of the drive circuit 104. An output end of the charge pump circuit 103 is connected to a second power supply end of the drive circuit 104. A control signal input end of the drive circuit 104 is connected to the controller 105. An input end of the power conversion circuit 106 is configured to connect to the photovoltaic module. An output end of the power conversion circuit 106 is configured to connect to an inverter 108. A direct current output by the power conversion circuit 106 is converted into an alternating current via the inverter 108, and the alternating current is connected to a power grid 109. The control signal input end of the drive circuit 104 is connected to the controller 105. A drive signal output end of the drive circuit 104 is connected to a control end of the power conversion circuit 106. The direct current converter 100 is configured to implement maximum power tracking of the photovoltaic module 107.

The first BUCK circuit 101 is configured to provide a first power supply for the drive circuit 104, and provide a power supply for the charge pump circuit 103. The charge pump circuit 103 is configured to provide a second power supply for the drive circuit 104. The second BUCK circuit 102 is configured to provide a power supply for the controller 105.

A working principle of the first BUCK circuit 101 is as follows: A switching transistor converts an input voltage of the photovoltaic module 107 into a current via an inductor, then the current is stored in a capacitor, and finally energy in the capacitor is released through periodic switching of the switching transistor, to reduce a voltage. For example, if the input voltage of the photovoltaic module 107 is about 30 V, the first BUCK circuit 101 may convert the input voltage of the photovoltaic module 107 into a voltage of about 12 V, to supply power to the charge pump circuit 103 and the drive circuit 104.

A working principle of the second BUCK circuit 102 is as follows: A switching transistor converts an input voltage of the first BUCK circuit 101 into a current via an inductor, then the current is stored in a capacitor, and finally energy in the capacitor is released through periodic switching of the switching transistor, to reduce a voltage. For example, if the input voltage of the first BUCK circuit 101 is about 12 V, the second BUCK circuit 102 may convert the input voltage of the first BUCK circuit 101 into a voltage of about 3.3 V, to supply power to the controller 105.

Switching transistors in the first BUCK circuit 101 and the second BUCK circuit 102 may include but be not limited to drive structures such as a metal-oxide-semiconductor field-effect transistor (metal-oxide-semiconductor field-effect transistor, MOSFET) driver, an insulated gate bipolar transistor (insulated gate bipolar transistor, IGBT) driver, and a gate driver (gate driver).

In addition, weak power supplies provided by both the first BUCK circuit 101 and the second BUCK circuit 102 may further provide power supplies to the controller 105 and other components in the direct current converter 100. A person skilled in the art may perform a connection according to a specific requirement, further reducing power supply costs.

The drive circuit needs to provide isolated drive power supplies for some switching transistors in the power conversion circuit 106. Therefore, the charge pump circuit 103 providing a power supply for the drive circuit is disposed. The charge pump circuit 103 converts a voltage output by the first BUCK circuit 101 into one independent power supply. The first BUCK circuit 101 and the charge pump circuit 103 may supply power to the drive circuit 104 at the same time. In this manner, two power supplies may be provided for the drive circuit 104, so that switching transistors in the power conversion circuit 106 are separately controlled. This reduces electromagnetic interference and noise, and improves efficiency and stability of the power conversion circuit 106.

It should be noted that the charge pump circuit 103 may alternatively be a flyback Buck-Boost circuit, which may also implement isolation and adjustable direct current conversion, and brings low electromagnetic interference (EMI). A person in the art should learn of a specific circuit structure and a specific control manner, and therefore details are not described herein again.

The drive circuit 104 may include a plurality of modules, for example, a control input module, an isolation module, a logic control module, and a drive output module. The control input module is usually configured to receive an input signal such as a PWM signal sent by the controller 105. The isolation module may provide electrical isolation to protect the controller 105 and a semiconductor device inside the drive circuit 104. The logic control module is configured to process the input signal sent by the controller 105. The drive output module is configured to generate a drive signal, to provide the drive signal for the power conversion circuit 106.

The controller 105 may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may alternatively be a combination for implementing a computing function. For example, the controller 105 may further include a combination of one or more microprocessors, a combination of a DSP and a microprocessor, or the like.

The power conversion circuit 106 is configured to convert, through the power conversion circuit 106, a direct current generated by the photovoltaic module 107 into an alternating current that meets a power grid requirement, and then connect the alternating current to a public power grid. The power conversion circuit 106 may include circuits such as a BUCK buck circuit, a Boost boost circuit or a BUCK-BOOST buck-boost circuit, a dual active bridge converter (dual active bridge converter, DAB), and an inverter. A person in the art should learn of a specific circuit type and a specific circuit combination manner, and therefore details are not described herein.

For example, the power conversion circuit 106 may further include a maximum power point tracking (maximum power point tracking, MPPT) circuit. The MPPT circuit detects an input voltage and an input current in real time to compute an input power. In addition, the photovoltaic system is enabled to track an input maximum power point according to some preset algorithms, so that the photovoltaic system can output more electrical energy to the power grid and increase a power generation amount.

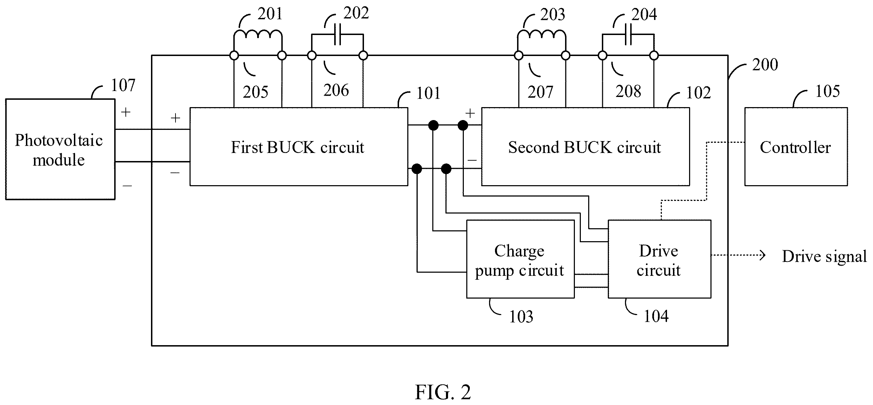

FIG. 2 is a diagram of a package structure of a direct current converter. The first BUCK circuit 101 includes at least one switching transistor, a first inductor 201, and a first capacitor 202. The second BUCK circuit 102 includes at least one switching transistor, a second inductor 203, and a second capacitor 204. Each switching transistor in the first BUCK circuit, each switching transistor in the second BUCK circuit, the charge pump circuit 103, and the drive circuit 104 are disposed in a packaged chip 200. The packaged chip 200 includes a first pin 205, a second pin 206, a third pin 207, and a fourth pin 208. The first pin 205 is connected to the first inductor 201. The second pin 206 is connected to the first capacitor 202. The third pin 207 is connected to the second inductor 203. The fourth pin 208 is connected to the second capacitor 204.

An input end of the packaged chip 200 is configured to connect to the photovoltaic module 107. A positive output end of the photovoltaic module 107 is connected to a positive input end of the first BUCK circuit 101. A negative output end of the photovoltaic module 107 is connected to a negative input end of the first BUCK circuit 101. A positive output end of the first BUCK circuit 101 is connected to a positive input end of the second BUCK circuit 102. A negative output end of the first BUCK circuit 101 is connected to a negative input end of the second BUCK circuit 102. An output end of the packaged chip 200 provides a drive signal for the power conversion circuit 106, and provides power supplies for the controller 105 and other components in the direct current converter 100. The first pin 205 to the fourth pin 208 each include two connection ports. For example, a first end of the first inductor 201 may be connected to a first connection port of the first pin 205, and a second end of the first inductor 201 may be connected to a second connection port of the first pin 205.

In this application, the inductor and the capacitor are placed outside the packaged chip 200, so that a required inductor and a capacitance value can be implemented more easily, a size of the direct current converter 100 is reduced, and a more complex circuit design can be implemented when design space is limited. In addition, if the inductor and the capacitor are placed outside the package, maintenance or replacement of the inductor and the capacitor becomes easier, and the inductor and the capacitor do not need to be detached for replacement. The inductor may heat up during working. Therefore, placing the inductor outside the packaged chip 200 can transfer heat to a surrounding environment more quickly, to reduce a temperature of the packaged chip 200 and improve reliability and a service life of the direct current converter 100. Moreover, placing the inductor outside the packaged chip 200 can reduce electromagnetic interference (EMI), so that a magnetic field and an electric field of the inductor do not interfere with other circuit components.

In addition, each switching transistor in the first BUCK circuit 101, each switching transistor in the second BUCK circuit 102, the charge pump circuit 103, and the drive circuit are disposed in a same package structure of the packaged chip 200, so that physical connection distances between circuits can be reduced, and reliability of the entire direct current converter 100 is improved. The foregoing components and circuits are placed in the same package. This may play a physical protection role, and reduce a failure rate of the circuit components. In addition, a plurality of circuits are integrated into the same package, and some components may be shared. Therefore, a quantity of components in the circuits may be further reduced.

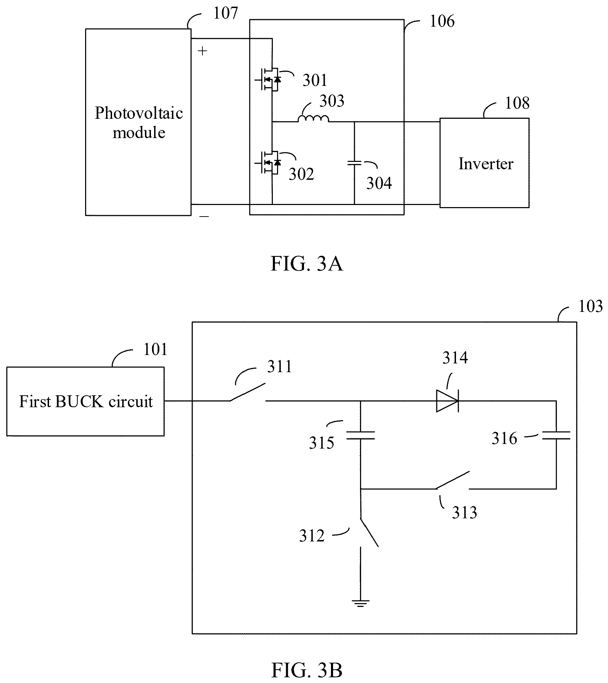

FIG. 3A is a schematic of a structure of a power conversion circuit. In a possible implementation, the power conversion circuit includes a first switching transistor 301, a second switching transistor 302, a third inductor 303, and a third capacitor 304. One end of the first switching transistor 301 is connected to a positive input end of the photovoltaic module 107. The other end of the first switching transistor 301 is connected to one end of the second switching transistor 302. The other end of the second switching transistor 302 is connected to a negative input end of the photovoltaic module 107. One end of the third inductor 303 is connected to the other end of the first switching transistor 301. The other end of the third inductor 303 is connected to the one end of the second switching transistor 301. The other end of the third capacitor is connected to the other end of the second switching transistor 302. The drive circuit 104 is configured to control turn-on statuses of the first switching transistor 301 and the second switching transistor 302, to adjust an output power of the photovoltaic module 107.

The first switching transistor 301 and the second switching transistor 302 may be one or more of a plurality of types of switch components such as a MOSFET, a bipolar junction transistor (bipolar junction transistor, BJT), an IGBT, and a silicon carbide (SiC) power transistor. This is not enumerated in this embodiment of this application. Each switching transistor may include a first end, a second end, and a control end. The control end is configured to control the switching transistor to be turned on or turned off. When the switching transistor is turned on, a current may be transmitted between the first end and the second end of the switching transistor. When the switching transistor is turned off, the current may not be transmitted between the first end and the second end of the switching transistor. The MOSFET is used as an example. The control end of the switching transistor is a gate, the first end of the switching transistor may be a source of the switching transistor, and the second end may be a drain of the switching device. Alternatively, the first end may be a drain of the switching transistor, and the second end may be a source of the switching transistor.

FIG. 3B is a schematic of a structure of a charge pump circuit. In a possible implementation, the charge pump circuit 103 includes a fourth switching transistor 311, a fifth switching transistor 312, a sixth switching transistor 313, a first diode 314, a fourth capacitor 315, and a fifth capacitor 316. One end of the fourth switching transistor 311 is connected to the output end of the first BUCK circuit 101. The other end of the fourth switching transistor 311 is connected to both one end of the fourth capacitor 315 and a positive electrode of the first diode 314. The other end of the fourth capacitor 315 is connected to a first end of the fifth switching transistor 312. A second end of the fifth switching transistor 312 is grounded. The other end of the fourth capacitor 315 is connected to a first end of the sixth switching transistor 313. A negative electrode of the first diode 314 is connected to one end of the fifth capacitor 316. A second end of the sixth switching transistor 313 is connected to the other end of the fifth capacitor 316.

The controller 105 is configured to control the fourth switching transistor 311 and the fifth switching transistor 312 to be turned on and the sixth switching transistor 313 to be turned off, to enable the fourth capacitor 315 to be charged. The controller 105 controls the fourth switching transistor 311 and the fifth switching transistor 312 to be turned on and the sixth switching transistor 313 to be turned off, to enable the first BUCK circuit 101 and the fourth capacitor 315 to charge the fifth capacitor 316, so that the fifth capacitor 316 provides a drive power supply for the drive circuit 104.

The controller 105 is further configured to control the first switching transistor 301 and the fourth switching transistor 311 to be turned on at the same time, and/or control the first switching transistor 301 and the fourth switching transistor 311 to be turned off at the same time, to enable the power conversion circuit 106 to be in a pass-through mode. In this way, the controller 105 controls the first switching transistor 301 and the fourth switching transistor 311 in the power conversion circuit 106 to be turned on at the same time, to enable the charge pump circuit 103 to provide an isolated drive power supply for the first switching transistor 301 in the power conversion circuit 106 when there is only one power supply, so that a pass-through turn-on requirement of the first switching transistor 301 is met. In this case, even if the second switching transistor 302 of the power conversion circuit 106 does not operate, the power conversion circuit 106 may still be in the pass-through mode.

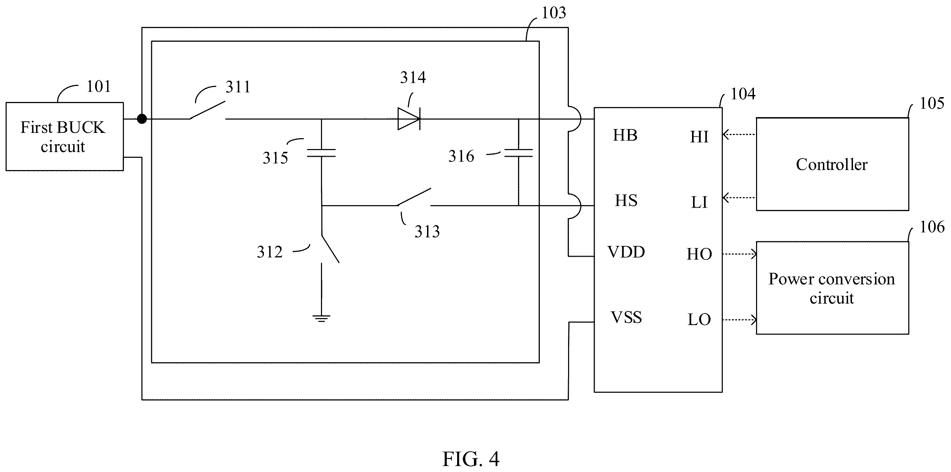

FIG. 4 is a connection diagram of a drive circuit. In a possible implementation, the drive circuit may include the following interface ends: a power input end (VDD), a ground end (VSS), a high-side half-bridge drive power input end (high-side bridge, HB), a high-side half-bridge drive power ground end (high side, HS), a high-side drive signal output end (high-side output, HO), a high-side drive signal input end (high-side input, HI), a low-side drive signal input end (low-side input, LI), and a low-side drive signal output end (low-side output, LO). The positive output end of the first BUCK circuit 101 is connected to the VDD end of the drive circuit, and the negative output end of the first BUCK circuit 101 is connected to the VSS end of the drive circuit 104. In this way, the first BUCK circuit 101 may provide a working voltage for the drive circuit. The negative electrode of the first diode 314 of the charge pump circuit 103 is connected to the HB of the drive circuit, and the second end of the sixth switching transistor 313 of the charge pump circuit 103 is connected to the HS end of the drive circuit. The HB end and the HS end are driven, so that when there is only one power supply, an isolated drive power supply is provided for the first switching transistor 301 of the power conversion circuit 106, to meet a turn-on requirement of the first switching transistor 301.

The HI end and the LI end of the drive circuit are connected to the controller 105. The HI end is configured to receive a high-side control signal, and the LI end receives a low-side control signal. The control signals are used to separately control turning on and turning off of the first switching transistor 301 and the second switching transistor 302 in the power conversion circuit 106, so that an output voltage of the power conversion circuit 106 is controlled.

The HO end of the drive circuit is configured to output a drive signal to the first switching transistor 301 of the power conversion circuit 106 based on the high-side control signal. The LO end of the drive circuit is configured to output a drive signal to the second switching transistor 302 of the power conversion circuit 106 based on the low-side control signal.

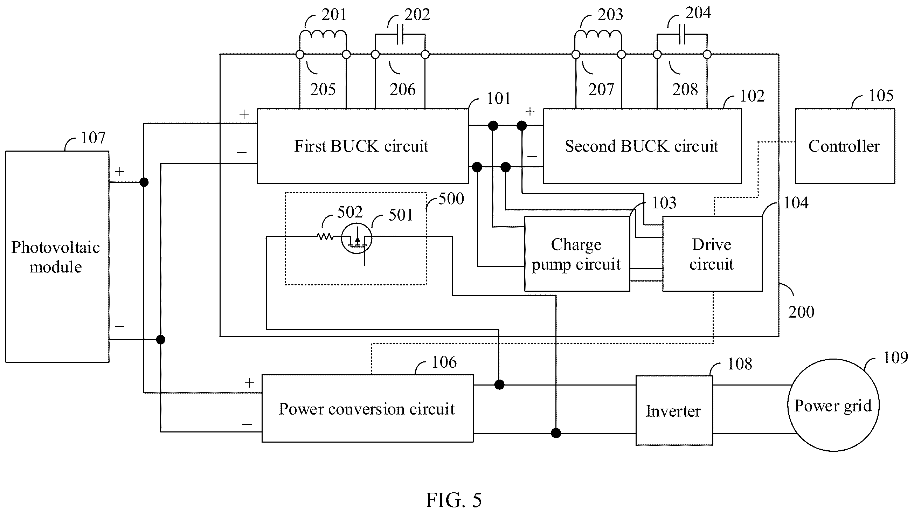

The photovoltaic module 107 is usually of a string structure. If the photovoltaic module 107 is reversely connected inside, many hazards and risks are generated. For example, if the photovoltaic module 107 is reversely connected, a current countercurrent is caused, and an electronic component in the photovoltaic module 107 may be damaged, so that performance of the photovoltaic module 107 is reduced and a service life of the photovoltaic module 107 is shortened. The reverse connection of the photovoltaic module 107 may cause the current to flow reversely. In this way, a power generation amount of the photovoltaic module 107 is reduced, and even no electricity can be generated. In addition, if the photovoltaic module 107 is reversely connected and connected to the power grid, a current countercurrent may be caused, and a safety risk such as a fire or an electric shock may be caused. FIG. 5 is a connection diagram of a reverse connection detection circuit. In a possible implementation, the direct current converter 100 further includes a reverse connection detection circuit 500. The reverse connection detection circuit 500 includes a third switching transistor 501 and a detection resistor 502. The reverse connection detection circuit 500 is connected in parallel to two sides of the third capacitor 304.

In a possible implementation, each switching transistor in the first BUCK circuit 101, each switching transistor in the second BUCK circuit 102, the charge pump circuit 103, the drive circuit 104, and the reverse connection detection circuit 500 are disposed in the packaged chip 200.

In a possible implementation, the controller 105 is configured to: after it is determined that the photovoltaic module 107 is powered on, the third switching transistor 501 is controlled to be turned on, to detect whether the photovoltaic module 107 is reversely connected. Alternatively, when it is determined that the third capacitor 304 has a residual charge, the third switching transistor 501 is controlled to be turned on, to release the residual charge on the third capacitor 304.

After the photovoltaic system is powered on, the third switching transistor 501 is pulled up by the controller 105 to be turned on. In this case, if any photovoltaic module is reversely connected, a resistance value of the circuit is enabled to change. Further, a resistance of the circuit is measured by using a multimeter, so that a reverse connection existing in the photovoltaic module 107 can be detected. In this way, operation of the photovoltaic module 107 is stopped in time, and the photovoltaic module 107 reversely connected is checked to prevent damage caused by operation under the reverse connection.

In addition, the capacitor in the power conversion circuit 106 is configured to filter out a direct current component of the circuit. However, after powering on is stopped, residual charges may still exist on the capacitor in the power conversion circuit 106. If these residual charges are not released, they may generate a transient high voltage when the power conversion circuit is turned on next time, so that a component in the circuit may be damaged. Therefore, the reverse connection detection circuit 500 is disposed in the packaged chip 200. In this case, when the residual charge of the capacitor in the power conversion circuit 106 needs to be released, the controller 105 turns on the third switching transistor 501, so that the residual charge can be released. The reverse connection detection circuit 500 is connected to the output end of the power conversion circuit 106, so that a loop is formed. When the power conversion circuit 106 is turned off, if there is still a residual charge in the capacitor, a magnitude of the residual charge may be detected by using the detection resistor 502. When the magnitude of the residual charge exceeding a safety threshold is detected, the controller 105 turns on the third switching transistor 501 to release the residual charge to a ground cable through the third switching transistor 501, so that a component in the circuit is avoided to be damaged.

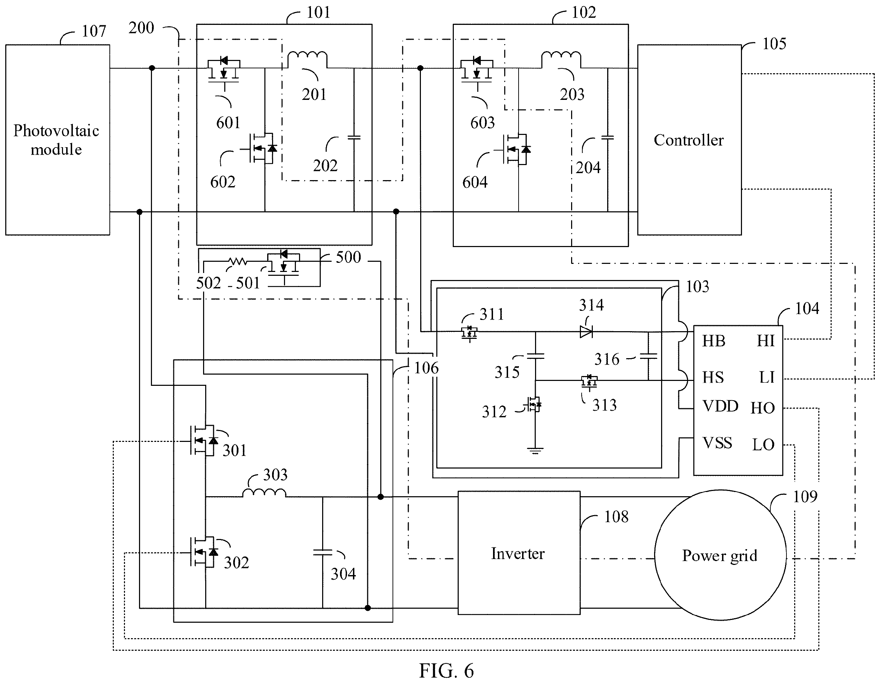

FIG. 6 is a diagram of a complete structure of a direct current converter according to an embodiment of this application. The input end of the first BUCK circuit is configured to connect to the photovoltaic module 107. The output end of the first BUCK circuit 101 is connected to the input end of the second BUCK circuit 102. Specifically, the first BUCK circuit 101 may include a sixth switching transistor 601, a seventh switching transistor 602, a first inductor 201, and a first capacitor 202. The second BUCK circuit 102 may include an eighth switching transistor 603, a ninth switching transistor 604, a second inductor 203, and a second capacitor 204.

A positive electrode of the photovoltaic module 107 is connected to a first end of the sixth switching transistor 601. A second end of the sixth switching transistor 601 is connected to both a first end of the first inductor 201 and a first end of the seventh switching transistor 602. A third end of the sixth switching transistor 601 is configured to input a signal for controlling a state of the sixth switching transistor 601. A second end of the seventh switching transistor 602 is connected to both a negative electrode of the photovoltaic module 107 and a first end of the first capacitor 202. A third end of the seventh switching transistor 602 is configured to input a signal for controlling a state of the seventh switching transistor 602. A second end of the second inductor 203 is connected to a second end of the second capacitor 204.

The first end of the first capacitor 202 is connected to a first end of the eighth switching transistor 603. A second end of the eighth switching transistor 603 is connected to both a first end of the second inductor 203 and a first end of the ninth switching transistor 604. A third end of the eighth switching transistor 603 is configured to input a signal for controlling a state of the eighth switching transistor 603. A second end of the ninth switching transistor 604 is connected to both a second end of the first capacitor 202 and a first end of the second capacitor 204. A third end of the ninth switching transistor 604 is configured to input a signal for controlling a state of the ninth switching transistor 604. The second end of the second inductor 203 is connected to the second end of the second capacitor 204.

The output end of the first BUCK circuit 101 is connected to the input end of the charge pump circuit 103. A first end of the fourth switching transistor 311 is connected to the first end of the first capacitor 202.

The output end of the first BUCK circuit 101 is further connected to the first power supply end of the drive circuit 104. The first end of the first capacitor 202 is connected to the VDD end of the drive circuit 104, and the second end of the first capacitor 202 is connected to the VSS end of the drive circuit 104.

The output end of the charge pump circuit 103 is connected to the second power supply end of the drive circuit 104. A first end of the fourth capacitor 315 is connected to the HB end of the drive circuit 104, and a second end of the fourth capacitor 315 is connected to the HS end of the drive circuit 104.

An output end of the controller 105 is configured to input the high-side control signal and the low-side control signal to the HI end and the LI end of the drive circuit 104. The HO end of the drive circuit 104 is configured to output the drive signal to the first switching transistor 301 of the power conversion circuit 106 based on the high-side control signal. The LO end of the drive circuit 104 is configured to output the drive signal to the second switching transistor 302 of the power conversion circuit 106 based on the low-side control signal.

According to the direct current converter provided in this application, the charge pump circuit converts the voltage output by the first BUCK circuit into one independent power supply. The first BUCK circuit and the charge pump circuit may serve as two independent power supplies to supply power to the drive circuit at the same time. In this manner, two power supplies may be provided for the drive circuit, so that switching transistors in the power conversion circuit are independently controlled. This reduces electromagnetic interference and noise, and improves efficiency and stability of the power conversion circuit. The inductor and the capacitor are placed outside the package of the packaged chip, so that sizes of the inductor and the capacitor required by the BUCK circuit can be met more easily. In this case, a size of the packaged chip is reduced, so that a more complex circuit design can be implemented when design space is limited. In addition, the inductor and the capacitor are placed outside the package, so that maintenance and replacement of the inductor and the capacitor become easier, the packaged chip does not need to be detached, and only the external inductor and the capacitor need to be manipulated. In addition, the charge pump circuit may provide an isolated drive power supply to the first switching transistor of the power conversion circuit. Therefore, even if the second switching transistor does not operate, the first switching transistor may still be in the pass-through mode, to meet a turn-on requirement of the first switching transistor. In addition, the switching transistor of the first BUCK circuit, the switching transistor of the second BUCK circuit, the charge pump circuit, and the drive circuit are disposed in the same packaged chip, so that a failure rate of the circuit component can further be reduced, and a quantity of components in the circuit can be reduced. The reverse connection detection circuit in the packaged chip can detect whether the photovoltaic module is reversely connected, and release the residual charge when there is the residual charge in the capacitor in the power conversion circuit, so that a component in the circuit is avoided to be damaged.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A direct current converter, wherein the direct current converter comprises a first BUCK circuit, a second BUCK circuit, a charge pump circuit, a drive circuit, a controller, and a power conversion circuit; an input end of the first BUCK circuit is configured to connect to the photovoltaic module; an output end of the first BUCK circuit is connected to an input end of the second BUCK circuit, an input end of the charge pump circuit, and a first power supply end of the drive circuit; an output end of the charge pump circuit is connected to a second power supply end of the drive circuit; an input end of the power conversion circuit is configured to connect to the photovoltaic module; an output end of the power conversion circuit is configured to connect to an inverter; a direct current output by the power conversion circuit is converted into an alternating current via the inverter, and the alternating current is connected to a power grid; a control signal input end of the drive circuit is connected to the controller; a drive signal output end of the drive circuit is connected to a control end of the power conversion circuit; and the direct current converter is configured to implement maximum power tracking of the photovoltaic module, wherein
the first BUCK circuit is configured to provide a first power supply for the drive circuit, and provide a power supply for the charge pump circuit;
the charge pump circuit is configured to provide a second power supply for the drive circuit; and
the second BUCK circuit is configured to provide a power supply for the controller.

2. The direct current converter according to claim 1, wherein the first BUCK circuit comprises at least one switching transistor, a first inductor, and a first capacitor;
the second BUCK circuit comprises at least one switching transistor, a second inductor, and a second capacitor;
each switching transistor in the first BUCK circuit, each switching transistor in the second BUCK circuit, the charge pump circuit, and the drive circuit are disposed in a packaged chip; and
the packaged chip comprises a first pin, a second pin, a third pin, and a fourth pin, wherein the first pin is connected to the first inductor, the second pin is connected to the first capacitor, the third pin is connected to the second inductor, and the fourth pin is connected to the second capacitor.

3. The direct current converter according to claim 1 or 2, wherein the power conversion circuit comprises a first switching transistor, a second switching transistor, a third inductor, and a third capacitor;
one end of the first switching transistor is connected to a positive input end of the photovoltaic module, the other end of the first switching transistor is connected to one end of the second switching transistor, the other end of the second switching transistor is connected to a negative input end of the photovoltaic module, one end of the third inductor is connected to the other end of the first switching transistor, the other end of the third inductor is connected to the one end of the second switching transistor, and the other end of the third capacitor is connected to the other end of the second switching transistor; and
the drive circuit is configured to control turn-on statuses of the first switching transistor and the second switching transistor, to adjust an output power of the photovoltaic module.

4. The direct current converter according to claim 3, wherein the direct current converter further comprises a reverse connection detection circuit, the reverse connection detection circuit comprises a third switching transistor and a detection resistor, and the reverse connection detection circuit is connected in parallel to two sides of the third capacitor.

5. The direct current converter according to claim 4, wherein the first BUCK circuit comprises the at least one switching transistor, the first inductor, and the first capacitor;
the second BUCK circuit comprises the at least one switching transistor, the second inductor, and the second capacitor; and
each switching transistor in the first BUCK circuit, each switching transistor in the second BUCK circuit, the charge pump circuit, the drive circuit, and the reverse connection detection circuit are disposed in the packaged chip.

6. The direct current converter according to claim 4, wherein the controller is configured to:
after it is determined that the photovoltaic module is powered on, control the third switching transistor to be turned on, to detect whether the photovoltaic module is reversely connected; or
when it is determined that the third capacitor has a residual charge, control the third switching transistor to be turned on, to release the residual charge on the third capacitor.

7. The direct current converter according to any one of claims 3 to 6, wherein the charge pump circuit comprises a fourth switching transistor, a fifth switching transistor, a sixth switching transistor, a first diode, a fourth capacitor, and a fifth capacitor; and
one end of the fourth switching transistor is connected to the output end of the first BUCK circuit, the other end of the fourth switching transistor is connected to both one end of the fourth capacitor and a positive electrode of the first diode, the other end of the fourth capacitor is connected to a first end of the fifth switching transistor, a second end of the fifth switching transistor is grounded, the other end of the fourth capacitor is connected to a first end of the sixth switching transistor, a negative electrode of the first diode is connected to one end of the fifth capacitor, and a second end of the sixth switching transistor is connected to the other end of the fifth capacitor.

8. The direct current converter according to claim 7, wherein the controller is configured to:
control the fourth switching transistor and the fifth switching transistor to be turned on and the sixth switching transistor to be turned off, to enable the first BUCK circuit to charge the fourth capacitor; and
control the fourth switching transistor and the sixth switching transistor to be turned on and the fifth switching transistor to be turned off, to enable the first BUCK circuit and the fourth capacitor to charge the fifth capacitor.

9. The direct current converter according to claim 7, wherein the controller is configured to:
control the first switching transistor and the fourth switching transistor to be turned on at the same time, or control the first switching transistor and the fourth switching transistor to be turned off at the same time, to enable the power conversion circuit to be in a pass-through mode.

10. The direct current converter according to claim 7, wherein a positive output end of the first BUCK circuit is connected to a power input end of the drive circuit; a negative output end of the first BUCK circuit is connected to a ground end of the drive circuit; the negative electrode of the first diode of the charge pump circuit is connected to a high-side half-bridge drive power input end of the drive circuit; the second end of the sixth switching transistor of the charge pump circuit is connected to a high-side half-bridge drive power ground end of the drive circuit; a high-side drive signal input end of the drive circuit is configured to receive a high-side control signal sent by the controller; a low-side drive signal input end of the drive circuit is configured to receive a low-side control signal sent by the controller; a high-side drive signal output end of the drive circuit is configured to output a drive signal to the first switching transistor based on the high-side control signal; and a low-side drive signal output end of the drive circuit is configured to output a drive signal to the second switching transistor based on the low-side control signal.
